# EUROPEAN PATENT APPLICATION

(11) **EP 1 742 466 A2**
(43) Date of publication of application: **10.01.2007**
(21) Application number: 06253490.4
(22) Date of filing: 03.07.2006
(51) Int. Cl.: H04N 5/44, H04N 5/445

(54) **Image display device and recording medium reproducing apparatus and recording medium reproducing method**

(30) Priority: 01.07.2005 KR 20050059397
(71) Applicant: LG Electronics Inc., Youngdungpo-Gu Seoul (KR)
(72) Inventor: Cho, Hyung Chan, Nam-gu, Incheon-si (KR)
(74) Representative: Camp, Ronald

(57) **Abstract**

An image display device includes: a tuner for receiving a broadcasting signal; a control unit for setting an OSD language or a caption language by extracting language information from the received image display device, and outputting the received broadcasting signal and multimedia data inputted from an external device; a storage unit for storing a plurality of language data; and a communication unit for transmitting information on the OSD language or the caption language to the external device, and receiving the multimedia data including audio data or caption data.

This can avoid the need for a user to reset the language each time a multimedia record is viewed.

## Description

The present invention relates to a recording medium reproducing apparatus connected to an image display device, and to a recording medium reproducing method using the same.

Image display devices display broadcasting signals and display video signals received from recording medium reproducing apparatuses connected thereto.

Compact discs (CDs) and digital video discs (DVDs) have been widely used as recording media. Recently, recording media using Blue ray discs (BDs) and holograms have also been introduced.

The recording medium stores video data, audio data, and caption data. For example, the DVD provides eight kinds of audio data and thirty-two kinds of caption data.

When the recording medium is loaded on the recording medium reproducing apparatus, a user can select a reproduction language of the audio data or the caption data. When the user does not select the reproduction language, the audio data or the caption data are reproduced in a language initially set thereto.

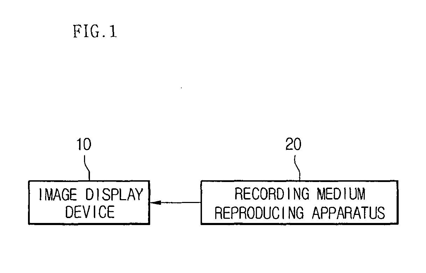

Referring to Fig. 1, an image display device 10 is connected to a recording medium reproducing apparatus 20. When a recording medium is loaded on the recording medium reproducing apparatus 20, the image display device 10 is set to a desired reproduction language using an input key disposed on a front surface of a remote controller or the image display device, in the case where the initially set reproduction language is not a desired language.

However, although the reproduction language of the audio data or the caption data is set, the set language is not stored in the recording medium reproducing apparatus 20. Therefore, when another recording medium is reproduced, there is an inconvenience in that the reproduction language is set again.

The user has to directly set the reproduction language through an on screen display (OSD) menu screen. Therefore, when the user is not used to the OSD menu manipulation, or the OSD language is not his or her native language, it can be difficult for the user to set the reproduction language.

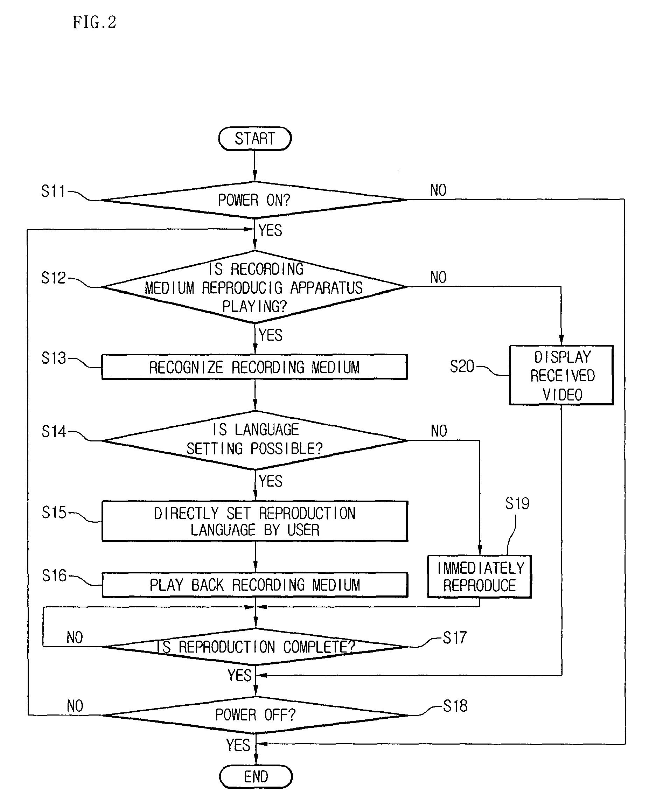

A prior art reproduction language setting method will now be described with reference to Fig. 2.

In operations S11 and S12, it is determined whether or not a user selects a reproduction of a recording medium when the user inputs a power-on command to the recording medium reproducing apparatus.

In operation S13, when the user selects the production of the recording medium, the recording medium is recognized by loading the recording medium.

In operation S14, it is determined whether or not a reproduction language setting of the recording medium is possible.

In operations S15 and S16, when the reproduction language setting is possible, the user directly sets the reproduction language and reproduces the corresponding recording medium.

In operation S17 and S18, when the reproduction is completed and the user inputs a power-off command, the reproduction of the recording medium is ended.

In operation S19, when the reproduction language setting is impossible in operation S14, the initially set reproduction language is reproduced.

In operation S20, when the user does not play the recording medium reproducing apparatus in operation S12, a received video is displayed as it is.

As described above, in reproducing the recording medium, the user has to directly set the reproduction language when a mainly used language and an initially set language are different from each other.

The present invention seeks to provide an improved image display devices, recording medium reproducing apparatus, and recording medium reproducing method using the same.

Additional advantages and features of the invention will be set forth in the description which follows and in part will become apparent to those having ordinary skill in the art upon examination of the following or may be learned from practice of the invention.

In accordance with a first aspect of the invention, there is provided an image display device including: a tuner arranged to receive a broadcast signal; a control unit arranged to set an OSD language or a caption language by extracting language information from the received image display device, and to output the received broadcast signal and multimedia data inputted from an external device; a storage unit arranged to store a plurality of language data; and a communication unit arranged to transmit information on the OSD language or the caption language to the external device, and to receive the multimedia data including audio data or caption data.

In accordance with another aspect of the invention, there is provided an image display device including: a tuner arranged to receive a broadcast signal; a storage unit arranged to store a plurality of language data; a control unit arranged to extract language information from the broadcast signal, to set an OSD language or a caption language to an extracted language when the extracted language information coincides with any one of the language data stored in the storage unit, and to control the received broadcast signal to be outputted.

In accordance with another aspect of the invention, there is provided a displaying method including: transmitting a set language information to an external device; receiving multimedia data reproduced according to the language information from the external device; and outputting the multimedia data.

In accordance with a further aspect of the invention, there is provided a recording medium reproducing apparatus including: a recording medium reproduction unit arranged to reproduce a recording medium; a communication unit connected to an image display device and arranged to receive a language information of an OSD language or a caption language of the image display device and to transmit a reproduced multimedia data according to the received language information; and a control unit arranged to select a reproduction language from the recording medium according to the language information and to reproduce the multimedia data.

It is to be understood that both the foregoing general description and the following detailed description of the present invention are exemplary and explanatory and are intended to provide further explanation of the claimed invention.

Exemplary embodiments of the invention will now be described by way of non-limiting example only, with reference to the drawings, in which:

Fig. 1 is a block diagram illustrating an image display device and a recording medium reproducing apparatus according to the prior art;

Fig. 2 is a flowchart illustrating a prior art reproduction language setting method;

Figs. 3 is a block diagram illustrating an image display device and a recording medium reproducing apparatus according to an embodiment of the present invention;

Fig. 4 is a flowchart illustrating a method for setting an OSD language and a caption language of an image display device according to the present invention; and

Fig. 5 is a flowchart illustrating an operation of the recording medium reproducing apparatus according to the present invention.

Wherever possible, the same reference numbers will be used throughout the drawings to refer to the same or like parts.

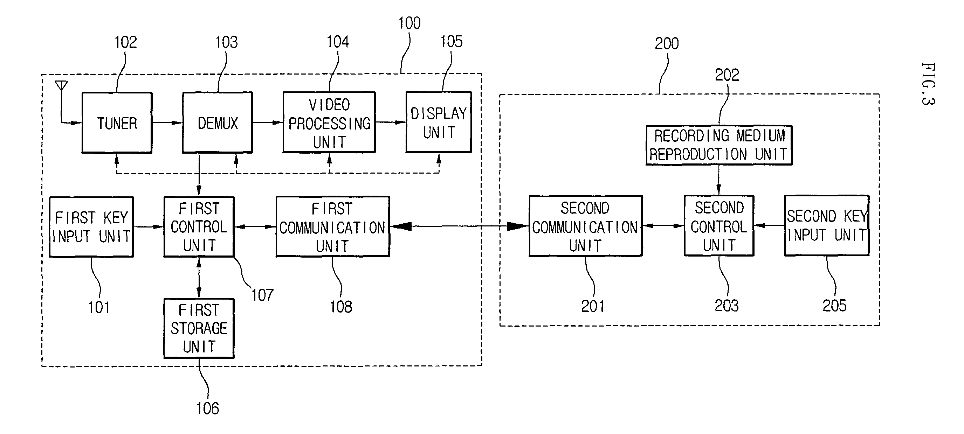

Referring to Fig. 3, an image display device 100 and a recording medium reproducing apparatus 200 are connected together such that they can communicate with each other.

The image display device 100 is configured to automatically set an OSD language or a caption language according to a received broadcasting signal. The recording medium reproducing apparatus 200 sets a reproduction language of a recording medium to the OSD language or the caption language of the image display device 100 through the communication with the image display device 100.

For example, the recording medium reproducing apparatus 200 may reproduce audio data or caption data stored in the recording medium in the same language as the OSD language or the caption language of the image display device 100.

When the audio data and the caption data stored in the recording medium are reproduced in the same language as the OSD language or the caption language, the user can conveniently view multimedia contents by reproducing the recording medium in a main language without setting a separate reproduction language.

Specifically, many users study a foreign language while viewing the caption displayed on the image display device 100. Therefore, in the case where audio data or caption data stored in the recording medium are reproduced in the same language as the caption language, the user can conveniently study the foreign language through multimedia contents.

As described above, the OSD language or the caption language of the image display device 100 can be automatically set by extracting language information from the received broadcasting signal. Alternatively, the OSD language or the caption language can be selected and set by the user.

The image display device 100 includes a tuner 102, a demux 103, a first storage unit 106, a first control unit 107, a video processing unit 104, a first communication unit 108, a first key input unit 101, and a display unit 105. The tuner 102 selects the received broadcasting signal and the demux 103 separates the selected broadcasting signal into a video signal, an audio signal, and additional information. The first storage unit 106 stores a plurality of language data. The first control unit 107 analyzes language information from the broadcasting signal separated by the demux 103, allows the OSD language or the caption language to be set to a language selected among the language data stored in the first storage unit 106, and allows the viewing of the multimedia contents. In addition, the video processing unit 104 processes the multimedia contents according to a control signal of the first control unit 107 such that they can be outputted. The first communication unit 108 communicates with the recording medium reproducing apparatus 200 according to the control signal of the first control unit 107. The first key input unit 101 inputs user commands into the first control unit 107 and the display unit 105 displays the multimedia contents processed in the video processing unit 104.

The recording medium reproducing apparatus 200 includes a second communication unit 201, a recording medium reproduction unit 202, a second control unit 203, and a second key input unit 205. The second communication unit 201 communicates with the first communication unit 108 of the image display device 100 and the recording medium reproduction unit 202 reproduces the recording medium. The second control unit 203 determines whether or not it is possible to set the reproduction language for the recording medium that is reproduced through the recording medium reproduction unit 202, and sets the reproduction language of the recording medium by determining whether or not the reproduction language supported by the recording medium coincides with the language information set to the image display device 100, the language information being received through the second communication unit 201. The second key input unit 205 inputs user commands.

An operation of the image display device and the recording medium reproducing apparatus will be described below.

When the user inputs a power-on command through the first key input unit 101 of the image display device 100, the first control unit 107 recognizes the inputted power-on command and outputs the control signal to the tuner 102 to select a channel that is previously selected by the user.

The demux 103 separates the broadcast signal received through the tuner 102 into video signal, audio signal, and additional information. The separated broadcast signal is inputted to the first control unit 107 and the first control unit 107 checks the language information included in the received broadcast signal.

In one example, the first control unit 107 analyzes the language information by parsing a teletex (TTX) of the broadcast signal or a caption unicode set, and controls to set the OSD language or the caption language of image display device 100 using the analyzed language information.

When the user wants to view a video stored in the recording medium through the recording medium reproducing apparatus 200, he or she inputs a power-on command through the second key input unit 205 and inputs a replay command.

The second control unit 203 recognizes the desired recording medium through the recording medium reproduction unit 202 and determines whether or not it is possible to set the reproduction language of the recording medium through the recording medium reproduction unit 202.

Then, the image display device 100 transmits the language information to the recording medium reproducing apparatus 200 through the first communication unit 108.

The second control unit 203 reproduces the recording medium in the same language when the language information set in the image display device 100 coincides with the selectable reproduction language of the recording medium reproduced through the recording medium reproduction unit 202.

On the other hand, the second control unit 203 reproduces the recording medium in the initially set reproduction language when the language information set in the image display device 100 does not coincide with the selectable reproduction language of the recording medium reproduced through the recording medium reproduction unit 202.

That is, the second control unit 203 reproduces the recording medium in the initially set reproduction language when the recording medium has no language data (audio data or caption data) corresponding to the language set in the image display device 100.

The video processing unit 104 outputs video and audio data received through the recording medium reproducing apparatus 200 and processes the caption data to be displayed through the display unit 105.

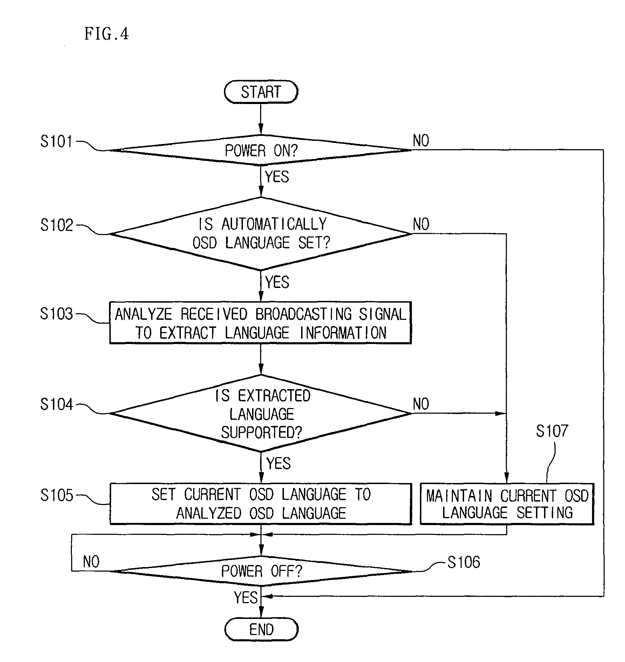

A flowchart illustrating a method for setting an OSD language and a caption language of an image display device will now be described with reference to Fig. 4.

Referring to Fig. 4, in operations S101 and S102, it is determined whether or not an automatic OSD language setting mode is selected, when a user inputs a power-on command to the image display device.

In operation S103, when the user selects the automatic OSD language setting mode, the language information is extracted by analyzing the received broadcast signal. For example, the language information can be extracted using text information included in the broadcast signal.

In operation S104, it is determined whether or not the OSD language can be selected according to the extracted language information. That is, it is determined whether or not the language data corresponding to the extracted language information exists in the language data stored in the first storage unit 106.

In operation S105, when the selectable language data exists, the OSD language is set according to the extracted language information.

In operation S107, when the user inputs a power-off command, the process is terminated.

In operation S107, when the user does not select the automatic OSD language setting mode or when there is no language data corresponding to the extracted language information, the current OSD language is maintained.

Although the OSD language is set through the automatic OSD language setting mode in Fig. 4, the caption language can also be set through an automatic caption language setting mode in the same manner as the automatic OSD language setting mode.

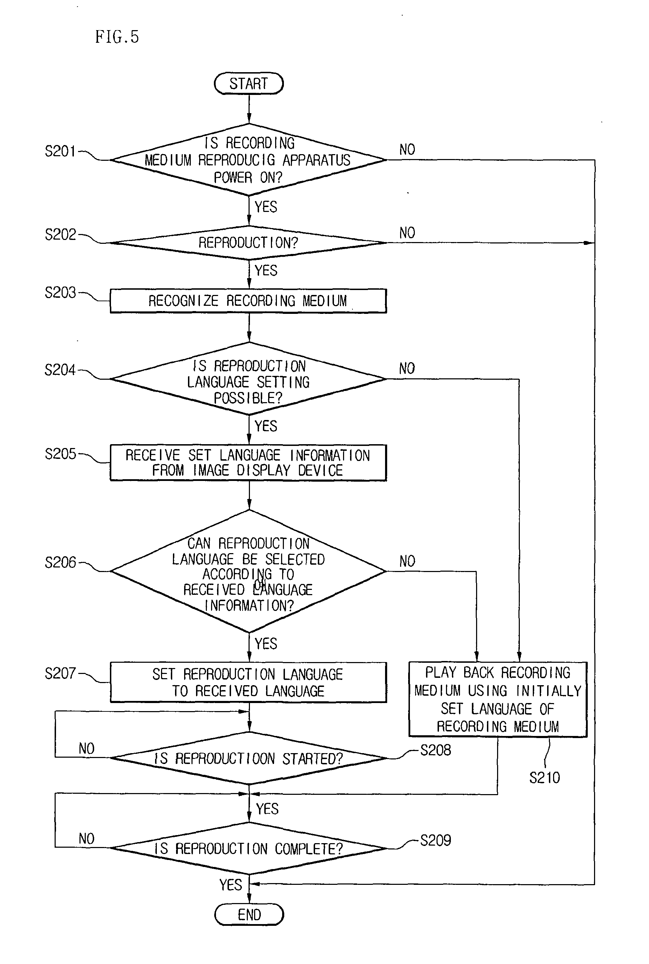

Operation of the recording medium reproducing apparatus will now be described with reference to Fig. 5.

Referring to Fig. 5, in operations S210 and S202, the power-on command of the recording medium reproducing apparatus is inputted and the play command of the recording medium is inputted.

In operations S203 and S204, the recording medium reproducing apparatus recognizes the recording medium and determines whether or not the reproduction language setting is possible. The reproduction language may be the audio data or the caption data, which is outputted together with the video data.

In operation S205, when the reproduction language setting of the recording medium is possible, the recording medium reproducing apparatus receives the language information from the image display device.

In operation S206, the recording medium reproducing apparatus receives the language information and determines whether or not the language information coincides with the reproduction language that is selectable in the recording medium.

In operation S207, when the reproduction language that is selectable in the recording medium coincides with the language information received from the image display device, the reproduction language of the recording medium is selected and reproduced according to the received language information.

The reproduction language may be the audio data or the caption data. When the language set in the image display device is the Korean language, audio and caption can be reproduced in the Korean language. Alternatively, the audio can be reproduced in the Korean language while the caption is reproduced in English. Also, the audio can be reproduced in English while the caption is reproduced in the Korean language.

The above-described operation can be determined according to the setting of the image display device.

In operation S210, when the reproduction language that is selectable in the recording medium does not coincide with the language information received from the image display device in operation S106, the recording medium is reproduced in the reproduction language initially set in the recording medium.

In operation S208 and S209, when the reproduction language is determined, the recording medium is reproduced and the reproduction of the recording medium is completed.

As described above, the OSD language or the caption language of the image display device can be set by analyzing the unicode set in the caption and the TTX information received by the image display device. Also, in reproducing the recording medium of the recording medium reproducing apparatus connected to the image display device, the reproduction language can be selected.

It will be apparent to those skilled in the art that various modifications and variations can be made within the scope of the invention. Thus, it is intended that the present invention covers modifications and variations that come within the scope of the claims.

## Claims

1. An image display device comprising:
a tuner arranged to receive a broadcast signal;
a control unit arranged to set an OSD language or a caption language by extracting language information from the received image display device, and to output the received broadcast signal and multimedia data inputted from an external device;
a storage unit arranged to store a plurality of language data; and
a communication unit arranged to transmit information on the OSD language or the caption language to the external device, and to receive the multimedia data including audio data or caption data.

2. The image display device according to claim 1, wherein the external device is a recording medium reproducing apparatus.

3. The image display device according to claim 1, wherein the control unit is arranged to extract the language information from teletex (TTX) of the received broadcast signal or a caption unicode set.

4. The image display device according to claim 1, wherein the external device is arranged to select and reproduce the OSD language or the caption language, and the communication unit is arranged to receive the multimedia data reproduced in the same language as the OSD language or the caption language.

5. An image display device comprising:
a tuner arranged to receive a broadcast signal;
a storage unit arranged to store a plurality of language data;
a control unit arranged to extract language information from the broadcast signal, to set an OSD language or a caption language to an extracted language when the extracted language information coincides with any one of the language data stored in the storage unit, and to control the received broadcasting signal to be outputted.

6. The image display device according to claim 5, wherein the control unit is arranged to extract the language information from a teletex (TTX) of the received broadcast signal or a caption unicode set.

7. A displaying method comprising:
transmitting a set language information to an external device;
receiving multimedia data reproduced according to the language information from the external device; and
outputting the multimedia data.

8. The displaying method according to claim 7, wherein the external device is a recording medium reproducing apparatus.

9. The displaying method according to claim 7, wherein the multimedia data is video data including at least one of an audio data and a caption data.

10. The displaying method according to claim 7, wherein the language information is an OSD language or a caption language.

11. A recording medium reproducing apparatus comprising:
a recording medium reproduction unit arranged to reproduce a recording medium;
a communication unit connected to an image display device and arranged to receive a language information of an OSD language or a caption language of the image display device and to transmit a reproduced multimedia data according to the received language information; and
a control unit arranged to select a reproduction language from the recording medium according to the language information and reproduce the multimedia data.

12. The recording medium reproducing apparatus according to claim 11, wherein, when the reproduction language coinciding with the language information is not stored in the recording medium, the control unit is arranged to reproduce the recording medium in a reproduction language initially set in the recording medium.
